# EUROPÄISCHE PATENTANMELDUNG

(11) **EP 3 361 118 A1**
(43) Veröffentlichungstag der Anmeldung: **15.08.2018**
(21) Anmeldenummer: 17208283.6
(22) Anmeldetag: 19.12.2017
(51) Int. Cl.: F16F 9/04

(54) **LUFTFEDER MIT EINEM ZWEITEILIGEN KUNSTSTOFFDECKEL**

(30) Priorität: 09.02.2017 DE 102017202094
(71) Anmelder: ContiTech Luftfedersysteme GmbH, 30165 Hannover (DE)
(72) Erfinder: Stahmer, Reinhard, 31535 Neustadt am Rübenberge (DE); Balachonzew, Boris, 30823 Garbsen (DE); Einhorn, Henrik, 30163 Hannover (DE)
(74) Vertreter: Finger, Karsten

(57) **Zusammenfassung**

Die Erfindung betrifft eine Luftfeder, aufweisend mindestens einen Luftfederbalg (1) und einen Deckel (6, 7, 8), wobei der Luftfederbalg (1) an mindestens einem axialen Ende (2) in einen radial umlaufenden Bördelwulst (4) übergeht und der Deckel (6, 7, 8) den Bördelwulst (4) mindestens teilweise luftdicht umgreift. Der Erfindung liegt die Aufgabe zugrunde, eine Luftfeder der eingangs geschilderten Art so zu verbessern, dass der Einsatz eines Deckels (6, 7, 8) aus Kunststoff analog zur Form einer Bördelplatte mit hoher Abzugssicherheit und sicherer Abdichtung zwischen Deckel (6, 7, 8) und Balg (1) möglich ist. Diese Aufgabe wird dadurch gelöst, dass der Deckel (6, 7, 8) aus mindestens zwei Bauteilen (6, 7) aus Kunststoff aufgebaut ist, wobei die beiden Bauteile (6, 7) zu einem Abschlussdeckel (8) zusammenfügbar sind, wobei der Abschlussdeckel (8) den Bördelwulst (4) analog zu einer verbördelten Bördelplatte mindestens teilweise luftdicht umgreift. Durch die Zweiteiligkeit des Abschlussdeckels (8) ist die Form analog zu einer verbördelten Bördelplatte ohne plastische Umformung erreichbar, da die beiden Bauteile (6, 7) bereits fertigungsseitig derart geformt sind, dass beim Zusammenfügen die beiden Bauteile (6, 7) den Bördelwulst (4) des Balges (1) korrespondierend zu seiner Form umgreifen.

## Beschreibung

Die Erfindung betrifft eine Luftfeder, aufweisend mindestens einen Luftfederbalg und einen Deckel, wobei der Luftfederbalg an mindestens einem axialen Ende in einen radial umlaufenden Bördelwulst übergeht und der Deckel den Bördelwulst mindestens teilweise luftdicht umgreift.

Luftfedern, insbesondere für Nutzfahrzeuge, sind seit langem bekannt und im Einsatz. Sie weisen üblicherweise einen Luftfederbalg mit mindestens einem Deckel und einen Abrollkolben auf. Eine besonders verbreitete Variante der Luftfedern ist derart gestaltet, dass der Luftfederbalg einen radial nach außen weisenden Bördelwulst aufweist, um den der zylindrische Deckel aus Metall mit seinem ursprünglich zargenförmigen Rand durch plastische Umformung nach innen gedrückt ist, und damit den Bördelwulst umgreift, sodass eine feste und luftdichte Verbindung zwischen Bördelplatte und Luftfederbalg herstellbar ist. Diese Verbindung wird üblicherweise Bördeln oder Bördelung genannt. Die entsprechenden Deckel werden dementsprechend oft Bördelplatten genannt.

Die DE 32 46 599 A1 zeigt eine derartige Luftfeder.

Bördelplatten aus Metall sind zwar meist gut plastisch umformbar, weisen aber auch Nachteile wie Korrosionsanfälligkeit, hohes Gewicht und relativ hohe Kosten in der Beschaffung und beim Bördelprozess auf.

Es gibt daher Bestrebungen, die metallischen Bördelplatten durch Bauteile aus Kunststoff zu ersetzen. Dies geschieht meist dadurch, dass der Balg keinen äußeren Bördelwulst, sondern eine konusförmige Öffnung aufweist, in die ein korrespondierender konusförmiger Deckel hineinsteckbar und/oder einvulkanisierbar ist.

Die EP 1 761 717 B1 zeigt eine derartige Luftfeder.

Der Erfindung liegt die Aufgabe zugrunde, eine Luftfeder der eingangs geschilderten Art so zu verbessern, dass der Einsatz eines Deckels aus Kunststoff analog zur Form einer Bördelplatte mit hoher Abzugssicherheit und sicherer Abdichtung zwischen Deckel und Balg möglich ist.

Diese Aufgabe wird dadurch gelöst, dass der Deckel aus mindestens zwei Bauteilen aus Kunststoff aufgebaut ist, wobei die beiden Bauteile zu einem Abschlussdeckel zusammenfügbar sind, wobei der Abschlussdeckel den Bördelwulst analog zu einer verbördelten Bördelplatte mindestens teilweise umgreift.

Durch die Zweiteiligkeit des Abschlussdeckels ist die Form analog zu einer verbördelten Bördelplatte ohne plastische Umformung erreichbar, da die beiden Bauteile bereits herstellerseitig derart geformt sind, dass beim Zusammenfügen die Teile den Bördelwulst des Balges korrespondierend zu seiner Form umgreifen.

In einer Weiterbildung der Erfindung sind die Bauteile durch Schweißen zusammenfügbar.

In einer Weiterbildung der Erfindung sind die Bauteile durch Schweißen ohne Zusatzwerkstoff zusammenfügbar.

In einer Weiterbildung der Erfindung sind die Bauteile durch Schweißen mit Zusatzwerkstoff zusammenfügbar.

Eine Schweißverbindung ist bei entsprechenden Kunststoffen sowohl mit als auch ohne Zusatzwerkstoff relativ einfach machbar. Beispielsweise können die Teile durch Reibschweißen zusammengefügt werden oder durch Zufuhr aufgeschmolzenen artgleichen Kunststoffs. Dabei ist die thermische Belastung des Balges nur gering, da die meisten Kunststoffe nur eine geringe Wärmeleitung aufweisen. Die Wärmeeinflusszone bleibt daher äußerst klein.

In einer Weiterbildung der Erfindung sind die Bauteile durch Kleben zusammenfügbar.

Kunststoffe lassen sich mit entsprechenden Klebstoffen meist problemlos verkleben. Dadurch ist ein thermischer Einfluss auf die Luftfeder vollständig vermeidbar.

In einer Weiterbildung der Erfindung sind die Bauteile durch eine Einrastverbindung zusammenfügbar.

Einrastverbindungen sind besonders einfach montierbar.

In einer Weiterbildung der Erfindung sind die Bauteile durch eine Schraubverbindung zusammenfügbar.

Schraubverbindungen benötigen keine thermischen oder chemischen Hilfsmittel zum Zusammenfügen, weisen aber eine hohe Verbindungsfestigkeit auf.

In einer Weiterbildung der Erfindung weist der Abschlussdeckel eine Dichtung auf, die zwischen den Bauteilen des Abschlussdeckels angeordnet ist und durch die die Bauteile beim Zusammenfügen gegeneinander abdichtbar sind.

Auf diese Weise kann der Qualitätsanspruch an die Fügestellen der beiden Bauteile geringer ausfallen. Die Dichtung ist auch als Rastmittel bei einer Einrastverbindung der Bauteile nutzbar.

In einer Weiterbildung der Erfindung weist der Bördelwulst des Luftfederbalges eine Dichtlippe oder einen Dichtwulst auf.

In einer Weiterbildung der Erfindung ist die Dichtlippe oder der Dichtwulst zwischen den Bauteilen des Abschlussdeckels axial einklemmbar.

Durch eine axiale Klemmung der Dichtlippe sind sowohl die Bauteile des Abschlussdeckels gegeneinander als auch der Bördelwulst gegen den Abschlussdeckel abdichtbar.

In einer Weiterbildung der Erfindung ist die Dichtlippe oder der Dichtwulst radial abragend am Bördelwulst und durch den Abschlussdeckel radial stauchbar angeordnet.

Eine radiale Dichtlippe sorgt für eine einfache und gegen Beschädigungen bei der Montage relativ unempfindliche Abdichtung des Bördelwulstes gegen den Abschlussdeckel.

In einer Weiterbildung der Erfindung weist der Luftfederbalg im Bereich des Übergangs vom Balg in den Bördelwulst axial vorstehende Wülste auf, die bei zusammengefügtem Abschlussdeckel axial gegen den Abschlussdeckel gepresst sind.

Derartige Wülste sind bei der Vulkanisation der Bälge relativ leicht erzeugbar. Durch die Pressung zwischen den Wülsten und dem Abschlussdeckel ist die Dichtheit der Abschlussdeckel-Luftfederbalg-Verbindung besonders sicher.

Anhand der Zeichnung wird nachstehend ein Beispiel der Erfindung näher erläutert. Es zeigt
Fig. 1 einen zweiteiligen Abschlussdeckel für eine Schweißverbindung vor dem Verschweißen in einem Teillängsschnitt,
Fig. 2 den Abschlussdeckel in zusammengeschweißtem Zustand,
Fig. 3 einen zweiteiligen Abschlussdeckel mit einer Einrastverbindung und O-Ring-Dichtung,
Fig. 4 einen zusammengefügten Abschlussdeckel mit Einrastverbindung und einer axialen eingeklemmten Dichtlippe des Bördelwulstes,
Fig. 5 einen zusammengefügten Abschlussdeckel mit Einrastverbindung und einer radial gestauchtem Dichtlippe des Bördelwulstes,
Fig. 6 einen zusammengefügten Abschlussdeckel mit einer Schraubverbindung und
Fig. 7 einen zusammengefügten Abschlussdeckel mit einer Einrastverbindung und axialen Wülsten des Luftfederbalges.

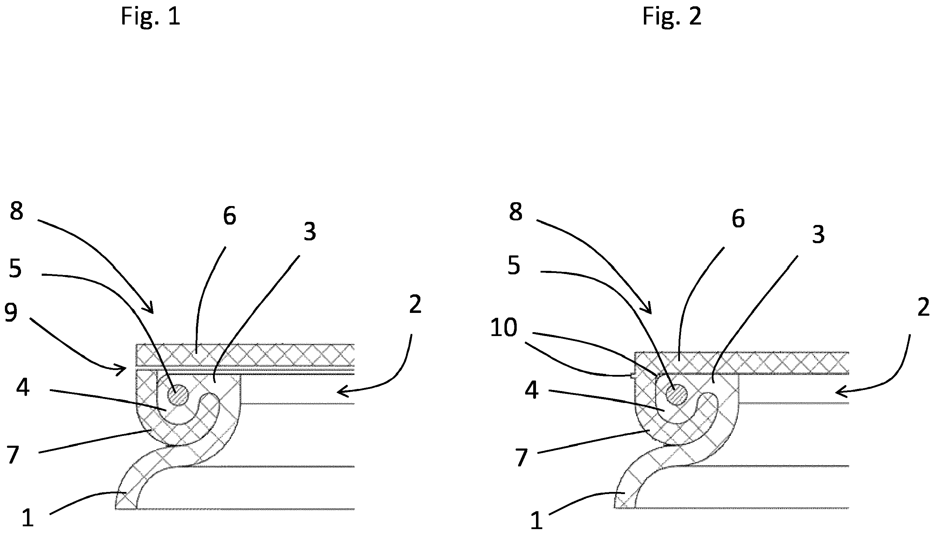

Die Fig. 1 zeigt einen Luftfederbalg 1 mit einem ersten axialen Ende 2, wobei der Luftfederbalg 1 in einem Übergangsbereich 3 in einen Bördelwulst 4 übergeht. Der Luftfederbalg 1, der Übergangsbereich 3 und der Bördelwulst 4 sind aus elastomerem Material aufgebaut, wobei der Luftfederbalg 1 mindestens eine hier nicht gezeigte Verstärkungslage aufweist, die in hier nicht sichtbarer Weise um einen im Bördelwulst 4 angeordneten ringförmigen Wulstkern 5 herumgelegt ist.

Der Aufbau des Luftfederbalges 1 mit Übergangsbereich 3 und Bördelwulst 4 mit Wulstkern 5 ist in allen Figuren prinzipiell gleich, daher werden in allen Figuren die gleichen Bezugszeichen verwendet.

In Fig. 1 sind außerdem ein erstes Bauteil 6 und ein zweites Bauteil 7 aus Kunststoff eines hier noch nicht zusammengefügten Abschlussdeckels 8 gezeigt.

Das erste Bauteil 6 ist hier plattenförmig ausgebildet, das zweite Bauteil 7 weist eine zum Bördelwulst 4 korrespondierende Form auf und greift um den Bördelwulst 4 mindestens teilweise herum. Zwischen Bauteil 6 und Bauteil 7 besteht im hier gezeigten Zustand eine Lücke 9.

In Fig. 2 ist die Anordnung aus Fig. 1 in einem Zustand gezeigt, bei dem das Bauteil 6 und das Bauteil 7 durch einen hier nicht dargestellten Schweißvorgang zu dem Abschlussdeckel 8 zusammengefügt sind. Ein hier mögliches Schweißverfahren wäre das Reibschweißen. Dadurch ist die in Fig. 1 noch vorhandene Lücke hier geschlossen und nicht mehr sichtbar. Die Bauteile 6 und 7 wurden axial gegeneinander verschoben, wodurch der Bördelwulst 4 in dem Abschlussdeckel 8 eingeklemmt ist. Der Abschlussdeckel 8 weist nun im Bereich der ehemaligen Lücke einen durch das Schweißen erzeugten radial nach innen und außen ragenden Wulst 10 auf. Der Bördelwulst 4 ist im Abschlussdeckel 8 sicher eingeklemmt, so dass ein luftdichter Abschluss zwischen Abschlussdeckel 8 und Luftfederbalg 1 gegeben ist.

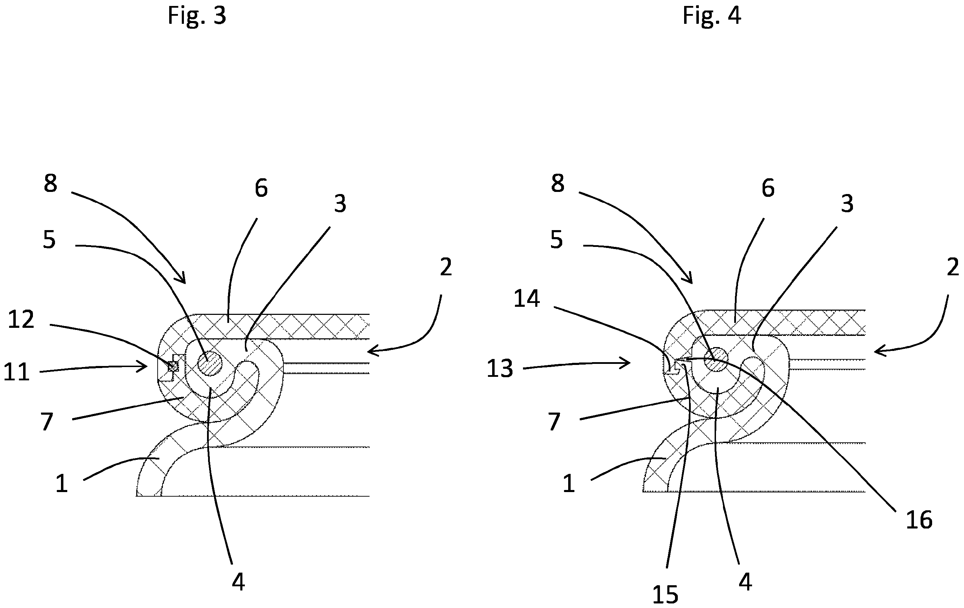

In Fig. 3 sind die Bauteile 6 und 7 mittels einer Einrastverbindung 11 miteinander verbunden. In die Einrastverbindung 11 ist eine O-Ring-Dichtung 12 integriert, die sowohl für eine sichere Abdichtung der Verbindung 11 als auch für die Verriegelung der Bauteile 6 und 7 im Bereich der Einrastung 11 sorgt.

Die Einrastung 11 ist durch axiales Zusammenpressen der Bauteile 6 und 7 erzeugbar, wobei der Bördelwulst 4 zwischen den Bauteilen 6 und 7 einklemmbar ist, so dass ein luftdichter Abschluss zwischen Abschlussdeckel 8 und Luftfederbalg 1 gegeben ist.

In Fig. 4 sind die Bauteile 6 und 7 ebenfalls durch eine Einrastverbindung 13 miteinander verbunden. Die Einrastung 13 ist hier durch radiale Hinterschnitte 14 und 15 realisiert. Aufgrund ihrer Eigenelastizität sind die aus Kunststoff bestehenden Bauteile 6 und 7 beim axialen Zusammenschieben ineinandergreifend zusammenclipsbar.

Der Bördelwulst 4 weist hier eine radial abragende Dichtlippe 16 auf, die so angeordnet ist, dass sie im zusammengefügten Zustand zwischen die Bauteile 6 und 7 im Bereich der Einrastverbindung 13 radial hineinragt und dort axial verpressbar ist. Dadurch ist eine gute Abdichtung sowohl der Bauteile 6 und 7 gegeneinander als auch zwischen dem Abschlussdeckel 8 und dem Bördelwulst 4 gegeben.

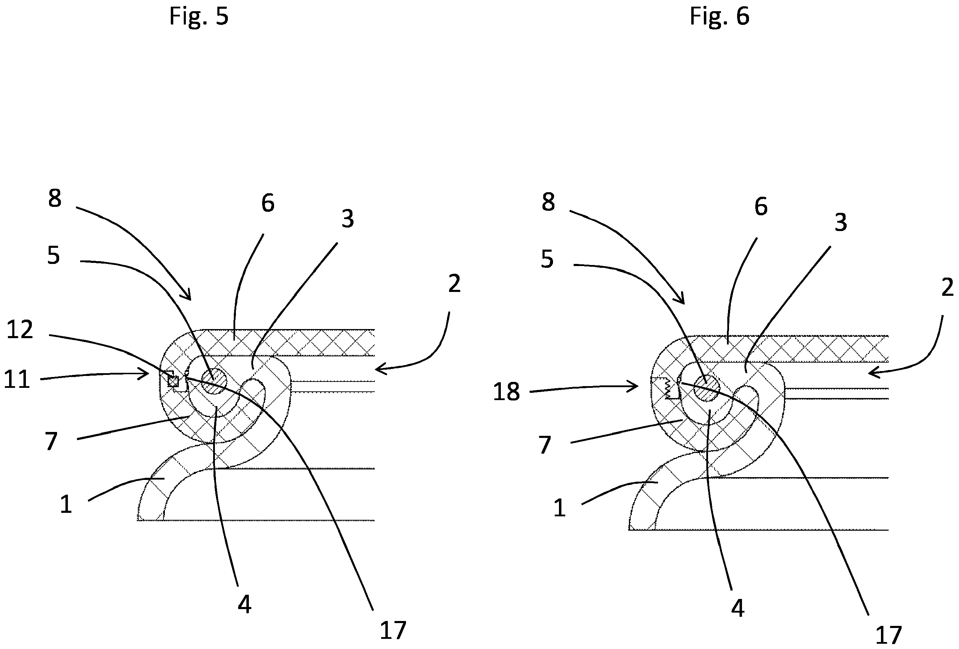

Die Anordnung der Fig. 5 entspricht der Anordnung gemäß Fig. 3, wobei hier der Bördelwulst 4 zusätzlich einen radial nach außen ragenden Dichtwulst 17 aufweist.

Im zusammengefügten Zustand ist der Dichtwulst 17 durch den Abschlussdeckel 8 radial zusammengepresst, sodass hier über die Dichtheit zwischen Bauteil 6 und 7 über die O-Ring-Dichtung 12 zusätzlich noch eine verbesserte Abdichtung des Bördelwulstes 4 gegen den Abschlussdeckel 8 erreichbar ist. Alternativ kann der O-Ring 12 auch nur zur Befestigung genutzt werden und dafür optimiert sein, beispielsweise durch Verwendung einer härteren Gummimischung.

Die Anordnung in Fig. 6 entspricht der Anordnung gemäß Fig. 5, wobei hier die Bauteile 6 und 7 über eine Schraubverbindung 18 zusammengefügt sind. Auch hier ist über den radial zusammengepressten Dichtwulst 17 eine besonders gute Dichtheit zwischen dem Bördelwulst 4 und dem Abschlussdeckel 8 gegeben. Die Schraubverbindung 18 sorgt hier für eine besonders gute axiale Verbindungskraft.

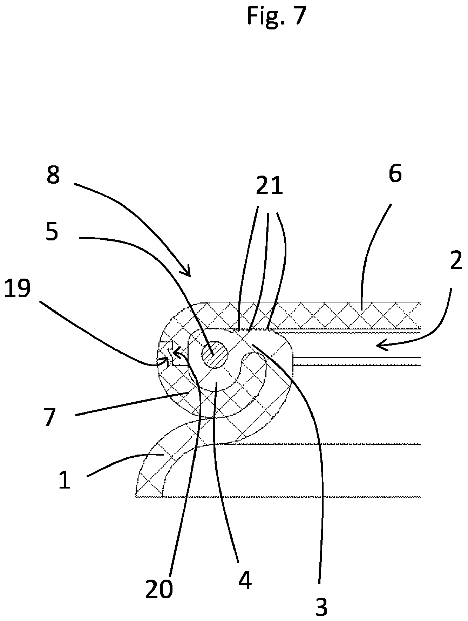

In Fig. 7 ist eine weitere Variante der erfindungsgemäßen Luftfeder mit einer Einrastverbindung gezeigt. Auch hier sind die Bauteile 6 und 7 mittels ineinander clipsbarer Hinterschnitte 19 und 20 zum Abschlussdeckel 8 zusammenfügbar. Durch die einseitig abgeschrägte Form der Hinterschnitte 19 und 20 ist diese Anordnung besonders leicht zusammenfügbar.

Im Übergangsbereich 3 weist der Luftfederbalg eine Mehrzahl von axial abragenden Dichtwülsten 21 auf. Beim Zusammenfügen der Bauteile 6 und 7 sind diese Dichtwülste 21 axial zwischen dem Luftfederbalg 1 und dem Abschlussdeckel 8 verpressbar. Diese Anordnung sorgt für eine gute Abdichtung des Luftfederbalges 1 gegen den Abschlussdeckel 8.

### Bezugszeichenliste

### (Teil der Beschreibung)

- 1: Luftfederbalg
- 2: axiales Ende des Luftfederbalges 1
- 3: Übergangsbereich
- 4: Bördelwulst
- 5: Wulstkern
- 6: erstes Bauteil
- 7: zweites Bauteil
- 8: Abschlussdeckel aus erstem Bauteil 6 und zweitem Bauteil 7
- 9: Lücke zwischen den Bauteilen 6 und 7
- 10: Wulst
- 11: Einrastverbindung mit O-Ring-Dichtung
- 12: O-Ring oder O-Ring-Dichtung
- 13: Einrastverbindung mit axial verpresster Dichtung
- 14, 15: Hinterschnitte
- 16: Dichtlippe am Bördelwulst 4
- 17: Dichtwulst am Bördelwulst 4
- 18: Schraubverbindung
- 19, 20: einseitig abgeschrägte Hinterschnitte
- 21: axiale Dichtwülste am Luftfederbalg 1

## Patentansprüche

1. Luftfeder, aufweisend mindestens einen Luftfederbalg (1) und einen Deckel (6, 7, 8), wobei der Luftfederbalg (1) an mindestens einem axialen Ende (2) in einen radial umlaufenden Bördelwulst (4) übergeht und der Deckel (6, 7, 8) den Bördelwulst (4) mindestens teilweise luftdicht umgreift, **dadurch gekennzeichnet, dass** der Deckel (6, 7, 8) aus mindestens zwei Bauteilen (6, 7) aus Kunststoff aufgebaut ist, wobei die beiden Bauteile (6, 7) zu einem Abschlussdeckel (8) zusammenfügbar sind, wobei der Abschlussdeckel (8) den Bördelwulst (4) analog zu einer verbördelten Bördelplatte mindestens teilweise luftdicht umgreift.

2. Luftfeder nach Anspruch 1, **dadurch gekennzeichnet, dass** die Bauteile (6, 7) durch Schweißen zusammenfügbar sind.

3. Luftfeder nach Anspruch 2, **dadurch gekennzeichnet, dass** die Bauteile (6, 7) durch Schweißen ohne Zusatzwerkstoff zusammenfügbar sind.

4. Luftfeder nach Anspruch 2, **dadurch gekennzeichnet, dass** die Bauteile 6, 7) durch Schweißen mit Zusatzwerkstoff zusammenfügbar sind.

5. Luftfeder nach Anspruch 1, **dadurch gekennzeichnet, dass** die Bauteile (6, 7) durch Kleben zusammenfügbar sind.

6. Luftfeder nach Anspruch 1, **dadurch gekennzeichnet, dass** die Bauteile (6, 7) durch eine Einrastverbindung (11, 13) zusammenfügbar sind.

7. Luftfeder nach Anspruch 1, **dadurch gekennzeichnet, dass** die Bauteile (6, 7) durch eine Schraubverbindung zusammenfügbar sind.

8. Luftfeder nach Anspruch 5, 6 und/oder 7, **dadurch gekennzeichnet, dass** der Abschlussdeckel (8) eine Dichtung (12) aufweist, die zwischen den Bauteilen (6, 7) des Abschlussdeckels (8) angeordnet ist und durch die die Bauteile (6, 7) beim Zusammenfügen gegeneinander abdichtbar sind.

9. Luftfeder nach mindestens einem der vorstehenden Ansprüche, **dadurch gekennzeichnet, dass** der Bördelwulst (4) des Luftfederbalges (1) eine Dichtlippe (16) oder einen Dichtwulst (17) aufweist.

10. Luftfeder nach Anspruch 9, **dadurch gekennzeichnet, dass** die Dichtlippe (16) zwischen den Bauteilen (6, 7) des Abschlussdeckels (8) axial einklemmbar ist.

11. Luftfeder nach Anspruch 9, **dadurch gekennzeichnet, dass** der Dichtwulst (17) radial abragend am Bördelwulst (4) und durch den Abschlussdeckel (8) radial stauchbar angeordnet ist.

12. Luftfeder nach mindestens einem der vorstehenden Ansprüche, **dadurch gekennzeichnet, dass** der Luftfederbalg (1) im Bereich des Übergangs (3) vom Balg (1) in den Bördelwulst (4) axial vorstehende Wülste (21) aufweist, die bei zusammengefügtem Abschlussdeckel (8) axial gegen den Abschlussdeckel (8) gepresst sind.
